# EUROPÄISCHE PATENTANMELDUNG

(11) **EP 0 658 515 A2**
(43) Veröffentlichungstag der Anmeldung: **21.06.1995**
(21) Anmeldenummer: 94112879.5
(22) Anmeldetag: 18.08.1994
(51) Int. Cl.: C02F 1/36, C02F 3/34, B01D 17/04

(54) **Verfahren zur Beseitigung von Ölverschmutzungen in Flüssigkeiten, insbesondere Wasser**

(30) Priorität: 17.12.1993 DE 4343156
(71) Anmelder: STN ATLAS Elektronik GmbH, D-28305 Bremen (DE)
(72) Erfinder: Flintjer, Bolko, Dr., D-26129 Oldenburg (DE); Wilken, Wilfried, Dr., D-26160 Bad Zwischenahn (DE)

(57) **Zusammenfassung**

Es wird ein Verfahren zur Beseitigung von Ölverschmutzungen in nichtöllösenden Flüssigkeiten angegeben, bei welchem der verunreinigten Flüssigkeit ölaufbereitende oder ölverzehrende Bakterien zugesetzt werden, die Ölpartikel in umweltverträgliche Ausscheidungsproukte umsetzen. Zur Verbesserung der Durchmischung von Öl und Bakterien und damit zur Verbesserung der Effektivität des Ölabbaus durch die Bakterien wird zur Erzeugung einer hochfeinen kolloiden Verteilung des Öls die verunreinigte Flüssigkeit mit hochenergetischem Ultraschall beschallt.

## Beschreibung

Die Erfindung betrifft ein Verfahren zur Beseitigung von Ölverschmutzungen in nichtöllösenden Flüssigkeiten, insbesondere Wasser, der im Oberbegriff des Anspruchs 1 angegebenen Gattung.

Solche Verfahren spielen insbesondere bei großflächigen Verschmutzungen der Meeresoberfläche, z. B. nach einem Tankerunglück oder beim Umweltschutz auf stark befahrenen Wasserstraßen, eine bedeutende Rolle. Auf die je nach Verschmutzungsgrad zunächst von einem Ölauffangschiff abgeschöpfte verbleibende Rohölfläche werden die Bakterien ausgestreut, die sich vom Öl ernähren und das im Wasser verbliebene Öl in unschädliche Restprodukte umwandeln. Für die Effektivität des Bakterieneinsatzes ist jedoch eine gleichmäßige Durchmischung der Bakterien mit dem für sie als Nährstoff dienenden Öl vorteilhaft. Da Öl und Wasser sich aber nicht miteinander mischen, sind auch der Vermischung von Öl und Bakterien frühe Grenzen gesetzt.

Der Erfindung liegt die Aufgabe zugrunde, ein Verfahren der eingangs genannten Art so zu verbessern, daß der Grad der Durchmischung von Öl und Bakterien wesentlich erhöht wird und dadurch die Effektivität des Bakterieneinsatzes für den Ölabbau um ein Vielfaches vergrößert wird.

Die Aufgabe ist bei einem Verfahren der im Oberbegriff des Anspruchs 1 definierten Gattung erfindungsgemäß durch die Merkmale im Kennzeichenteil des Anspruchs 1 gelöst.

Durch die hochenergetische Beschallung des Öl-Wasser-Gemisches mit Ultraschall unter Bildung von Kavitationen emulgiert das Öl und verteilt sich hochfein im Wasser. Die hochfeine kolloide Verteilung des Öls stellt sicher, daß die Bakterien sich sehr gut mit den Ölpartikeln vermischen und ihnen damit eine sehr große Öloberfläche zum Angreifen und zersetzen angeboten wird, die den Abbau der Ölreste in einem wesentlich größeren Umfang ermöglicht und damit den Abbau der Ölverschmutzung sehr viel schneller und vor Ort wirksamer werden läßt.

Vorteilhafte Ausgestaltungen und Weiterbildungen des erfindungsgemäßen Verfahrens ergeben sich aus den weiteren Ansprüchen.

In Anwendung des Verfahrens zur Bekämpfung von Ölflächen auf der Meeresoberfläche oder auf Binnenwasserstraßen, wie sie zum Beispiel nach Schiffskollisionen auftreten, wird nach einer vorteilhaften Ausgestaltung des erfindungsgemäßen Verfahrens das Öl-Wasser-Gemisch von einem Ölauffangschiff aufgenommen und durch Rohrleitungen in einen Sammelbehälter geleitet. In einem entsprechend ausgebildeten Rohrabschnitt erfolgt die Beschallung mit Ultraschall zur Herstellung der Emulsion. Die Bakterienkultur der ölfressenden Bakterien wird entweder im oder hinter dem Rohrabschnitt der Emulsion zugesetzt. Dieses solchermaßen ausgestaltete Verfahren kann in gleicher Weise und mit Vorteil zur Aufbereitung von Sickerwässern in ölverseuchten Deponien oder bei der Wiederaufbereitung der Abwässer aus Kraftfahrzeug-Waschanlagen eingesetzt werden.

Eine alternative Ausgestaltung des erfindungsgemäßen Verfahrens zur Bekämpfung von großflächigen Ölverschmutzungen, sog. Ölteppichen, auf der Wasseroberfläche sieht die Beschallung des Ölteppichs mit einer großflächigen Ultraschall-Sendeantenne vor, die mit geringem Abstand unterhalb der Meeresoberfläche verfahren, z.B. von einem Schiff geschleppt, wird. Gleichzeitig mit der oder unmittelbar an die Beschallung eines Streifens des Ölteppichs wird die Bakterienkultur diesem Streifen zugesetzt. Dieses Verfahren hat den Vorteil, daß direkt vor Ort das Öl in der Wasseroberfläche emulgiert und durch die Zugabe der Bakterien direkt abgebaut wird. Bis auf die Sendeantenne und auf die Ausstreuvorrichtung zur automatischen Zugabe der Bakterienkultur ist ein weitergehender apparativer Aufwand nicht erforderlich. Die Fahrgeschwindigkeit des Schiffes ist von der Einwirkungszeit des Ultraschalls abhängig, die erforderlich ist, um eine ausreichend feine kolloide Verteilung des Öls in der Wasseroberfläche sicherzustellen.

Das erfindungsgemäße Verfahren ist anhand von in der Zeichnung dargestellten Ausführungsbeispielen einer Vorrichtung zur Ölbeseitigung im folgenden näher beschrieben. Es zeigen jeweils in schematischer Darstellung
- Fig. 1: ausschnittsweise einen Querschnitt einer Binnenwasserstraße mit der Heckansicht eines mit einer Ölbeseitigungsvorrichtung ausgerüsteten Schiffes,
- Fig. 2: eine vergrößerte Darstellung eines Abschnitts der Ölbeseitigungsvorrichtung in Fig. 1, teilweise geschnitten,
- Fig. 3: ausschnittsweise einen Längsschnitt einer Ölbeseitigungsvorrichtung gemäß einem weiteren Ausführungsbeispiel.

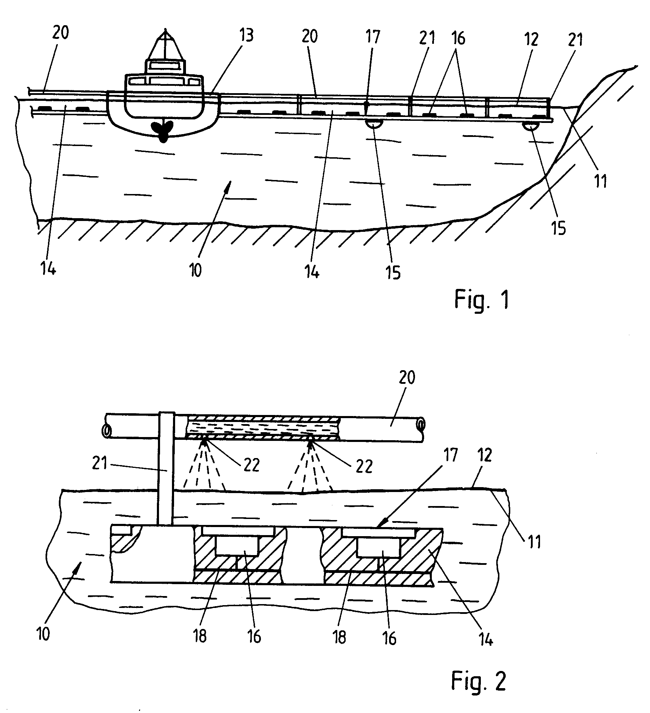

Die in Fig. 1 und 2 schematisch skizzierte Ölbeseitigungsvorrichtung dient zur Bekämpfung von Öllachen größeren Ausmaßes, sog. Ölteppichen, auf dem Meer oder auf einer Binnenschiffahrtsstraße, z. B. einem Fluß oder einem Kanal, wie sie sich nach einer Schiffskollision oder einer Kollision eines Ölfrachters auf der Wasseroberfläche ausbreiten. In Fig. 1 ist die Binnenwasserstraße mit 10, die Wasseroberfläche mit 11 und der auf dieser vorhandene Ölteppich mit 12 gekennzeichnet.

Die zur Ölbekämpfung eingesetzte Ölbeseitigungsvorrichtung ist auf einem Schiff 13 installiert und umfaßt zwei lange Ausleger 14, die seitlich am Schiff 13 schwenkbar gehalten sind und während des Einsatzes ausgeschwenkt werden, so daß sie sich in etwa quer zur Schiffslängsrichtung erstrecken. Die beiden steuerbord und backbord angeordneten Ausleger 14 sind identisch ausgebildet, so daß in Fig. 1 auf die vollständige Darstellung des backbordseitigen Auslegers 14 verzichtet worden ist. Die Ausleger 14 haben vorzugsweise eine solche Länge, daß sie die gesamte Breite der Binnenschiffahrtsstraße 10 von Ufer zu Ufer überdecken. Die Ausleger 14 sind so montiert, daß sie sich knapp unterhalb der Wasseroberfläche 11 erstrecken, wobei der Abstand ihrer Oberseiten von der Wasseroberfläche 11 etwa 10 bis 20 cm beträgt. Mit an der Unterseite der Ausleger 14 angeordneten Schwimmkörpern 15 wird eine horizontale Ausrichtung der Ausleger 14 gewährleistet.

Auf der Oberseite der Ausleger 14 sind eine Vielzahl von elektroakustischen Wandlern 16, sog. Schallwandlern oder Hydrophonen, angeordnet, die so in die Ausleger 14 eingebaut sind, daß ihre Abstrahlrichtungen vertikal nach oben zur Wasseroberfläche 11 weisen. Die in ihrer Gesamtheit eine elektroakustische Sendeantenne 17 bildenden Wandler 16 werden von einer hier nicht dargestellten Sendeeinrichtung im Schiff 13 angesteuert und strahlen hochenergetischen Ultraschall ab. In Fig. 2 sind zwei Wandler 16 mit ihren Anschlußkabeln 18 zur Sendeeinrichtung dargestellt. Sie sind hier in die Oberseite der Ausleger 14 eingesetzt und mit Polyurethanharz vergossen.

Oberhalb der Wasseroberfläche 11 erstreckt sich vom Schiff 13 aus längs eines jeden Auslegers 14 eine Rohrleitung 20, die über Streben 21 an dem darunterliegenden Ausleger 14 abgestützt ist. Die Rohrleitung 20 enthält eine Vielzahl von Düsenöffnungen 22, die an der zur Wasseroberfläche 11 weisenden Unterseite der Rohrleitung 20 äquidistant über die Länge der Rohrleitung 20 verteilt angeordnet sind. Die beiden Rohrleitungen 20 werden vom Schiff 13 aus über nicht dargestellte Pumpen mit Wasser oder einer sonstigen umweltverträglichen Flüssigkeit beaufschlagt, dem eine Bakterienkultur von ölverzehrenden Bakterien beigemischt ist. Dieses mit Bakterien versetzte Wasser wird über die Düsenöffnungen 22 auf die Wasseroberfläche 11 aufgesprüht. Ölverzehrende Bakterienkulturen sind im Handel erhältlich und werden beispielsweise von der Firma Allied Colloids GmbH unter der Bezeichnung Zx80 und Zx90 vertrieben.

Mit dieser Ölbeseitigungsvorrichtung wird das Verfahren wie folgt durchgeführt:
Das Schiff 13 kann entweder den Ölteppich 12 durchfahren oder aber auch festliegen, so daß der Ölteppich 12 mit der Fließgeschwindigkeit des Wassers über die Ausleger 14 hinwegzieht. Mittels der Sendeantenne 17 wird der Ölteppich 12 bez. das zwischen Ölteppich 12 und Sendeantenne 17 befindliche Öl-Wasser-Gemisch mit hoher Sendeenergie im Ultraschall beschallt. Gleichzeitig werden über die Rohrleitungen 20 die ölverzehrenden Bakterien auf die Wasseroberfläche 11 aufgesprüht. Durch die hochenergetische Beschallung des Öl-Wasser-Gemisches entsteht aus den ansonsten nicht mischbaren Bestandteilen Öl und Wasser eine Emulsion, in welcher das Öl hochfein kolloid verteilt ist. Durch diese hochfeine Verteilung hat das Öl eine um Größenordnungen erhöhte Oberfläche und kann somit von den zugesetzten ölverzehrenden Bakterien besser angegriffen werden.

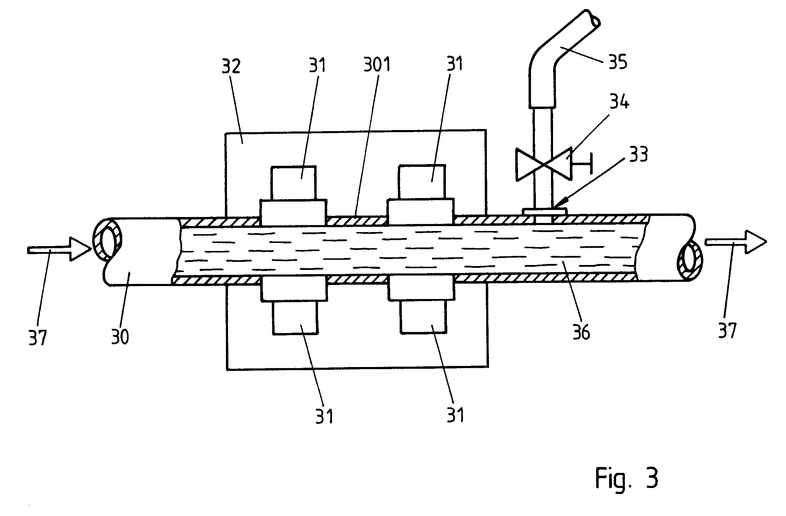

In Fig. 3 ist ein weiteres Ausführungsbeispiel einer Ölbeseitigungsvorrichtung ausschnittsweise dargestellt. Am Rohrabschnitt 301 einer von einer Ölabschöpfvorrichtung zu einem Sammelbehälter führenden Rohrleitung 30 ist eine Mehrzahl von elektroakustischen Wandlern 31 angeordnet, die von einer hier nicht dargestellten Sendeeinrichtung mit hoher Sendeleistung betrieben werden. Mehrere Ultraschallwandler 31 sind dabei in einer Ebene um gleiche Umfangswinkel versetzt so in die Rohrwand des Rohrabschnitts 301 eingesetzt, daß ihre Senderichtung radial ins Rohrinnere weist. Mehrere, hier zwei, solcher Ringe von Wandlern 31 sind im Axialabstand innerhalb des Rohrabschnitts 301 angeordnet und von einem Gehäuse 32 umgeben. In Strömungsrichtung dem Gehäuse 32 nachgeordnet ist im Rohr 30 eine Zugabevorrichtung 33 mit einem elektrisch oder pneumatisch gesteuerten Dosierventil 34 angeordnet, die über eine Verbindungsleitung 35 an einer nicht dargestellte Vorratskammer angeschlossen ist. In der Vorratskammer sind Bakterienkulturen von ölverzehrenden Bakterien in Vermischung mit einem flüssigen oder pulverförmigen Trägermedium eingelagert. Dieses mit Bakterien durchsetzte Trägermedium wird über das Dosierventil 34 der Zugabevorrichtung 33 zugeführt, die ihrerseits die Dosiermenge in das Innere der Rohrleitung 30 einspeist.

Das Verfahren zur Beseitigung von Ölverunreinigung im Wasser, insbesondere von großen Öllachen auf der Wasseroberfläche, verläuft hier so, daß zunächst die Öllache mechanisch abgeschöpft wird. Hierzu verwendete Ölabschöpfgeräte oder besonders konstruierte Ölauffangschiffe sind allgemein bekannt. Das abgeschöpfte Öl-Wasser-Gemisch wird über die Rohrleitung 30 in den Sammelbehälter gepumpt. Das Öl-Wasser-Gemisch ist in Fig. 3 mit 36 gekennzeichnet, seine Fließrichtung mit den Pfeilen 37. Beim Durchströmen des Rohrabschnitts 301 wird das Öl-Wasser-Gemisch 36 von den Wandlern 31 mit Ultraschall hoher Energie beschallt, so daß in gleicher Weise wie vorstehend beschrieben, eine Emulsion hergestellt wird, innerhalb welcher das Öl hochfein kolloid verteilt ist. Am Ende des Rohrabschnitts 301 werden über die Zugabevorrichtung 33 die ölverzehrenden Bakterien in ausreichender Menge zugesetzt, die dann in dem verbleibenden Abschnitt der Rohrleitung 30 und in dem Sammelbehälter die Ölpartikel aufbereiten und in unschädliche Restprodukte umwandeln.

Es ist auch möglich, die vorstehend beschriebenen beiden Verfahren nach Fig. 3 und Fig. 1 zu kombinieren, indem zunächst das Öl mechanisch abgeschöpft und das abgeschöpfte Öl-Wasser-Gemisch in der beschriebenen Weise mit Ultraschall behandelt und mit Bakterien versetzt wird und danach die auf der Wasseroberfläche verbleibende Restöllache mit geringerem Ölanteil unter Zusetzung von ölverzehrenden Bakterien großflächig mit Ultraschall in der vorstehend beschriebenen Weise beschallt wird. Diese Kombination der Verfahren ist insbesondere für großflächige Ölverschmutzungen der Wasseroberfläche von katastrophalem Ausmaße besonders vorteilhaft.

Die Erfindung ist nicht auf die beschriebenen Ausführungsbeispiele beschränkt. So kann die Ölbeseitigungsvorrichtung gemäß Fig. 1 und 2 auch auf einem separaten Träger angeordnet werden, der entweder von einem Schiff geschleppt oder als sog. Ölsperre auf eine Binnenwasserstraße verbracht und dort festgelegt wird. Die Ölbeseitigungsvorrichtung gemäß Fig. 3 kann auch zur Entsorgung von ölverschmutztem Sickerwasser aus Deponien oder zur Wiederaufbereitung des Abwassers in Waschanlagen für Kraftfahrzeuge eingesetzt werden. In diesen Fällen entfällt das Abschöpfen des Öl-Wasser-Gemisches, und das gesamte Wasser wird nach Durchlaufen von Ölvorfiltern durch den Rohrabschnitt 301 hindurchgeleitet.

## Patentansprüche

1. Verfahren zur Beseitigung von Ölverschmutzungen in nichtöllösenden Flüssigkeiten, insbesondere Wasser, bei welchem der verunreinigten Flüssigkeit ölaufbereitende Bakterien zugesetzt werden, die Ölpartikel in umweltverträgliche Ausscheidungsprodukte umsetzen, dadurch gekennzeichnet, daß zur Erzielung einer hochfeinen kolloiden Verteilung des Öls die verunreinigte Flüssigkeit mit hochenergetischem Ultraschall beschallt wird.

2. Verfahren nach Anspruch 1, insbesondere zum Bekämpfen von Ölteppichen (12) auf Wasseroberflächen (11), dadurch gekennzeichnet, daß das Öl-Wasser-Gemisch (36) abgeschöpft, zur Beschallung durch einen Rohrabschnitt (301), in dem eine Mehrzahl von in den Rohrabschnitt (301) hinein Ultraschall abstrahlenden elektroakustischen Wandlern (31) vorgesehen ist, hindurchgeführt und im oder hinter dem Rohrabschnitt (301) mit den ölverzehrenden Bakterien versetzt wird.

3. Verfahren nach Anspruch 1 oder 2, insbesondere zum Bekämpfen von Ölteppichen (12) auf Wasseroberflächen (11), dadurch gekennzeichnet, daß der Ölteppich (12) mittels einer im geringen Abstand unterhalb der Wasseroberfläche (11) verfahrbaren Sendeantenne (17) aus einer Vielzahl von elektroakustischen Wandlern (16) beschallt wird und die ölaufbereitenden Bakterien auf die beschallte Teppichfläche ausgestreut werden.
